# EUROPEAN PATENT SPECIFICATION

(11) **EP 3 744 175 B1**
(45) Date of publication and mention of the grant of the patent: **29.05.2024**
(21) Application number: 19177565.9
(22) Date of filing: 31.05.2019
(51) Int. Cl.: A01N 57/20, C14C 9/00

(54) **COMPOSITION FOR IMPREGNATING A SUBSTRATE, IN PARTICULAR A WATCHSTRAP**
ZUSAMMENSETZUNG ZUR IMPRÄGNIERUNG EINES SUBSTRATS, INSBESONDERE EIN UHRENARMBAND
COMPOSITION POUR IMPRÉGNER UN SUBSTRAT, EN PARTICULIER UN BRACELET DE MONTRE

(43) Date of publication of application: 02.12.2020
(60) Divisional application: 22201395.5
(73) Proprietor: Rolex S.A., 1211 Genève 26 (CH)
(72) Inventor: DURGNAT, Jean-Marc, 1012 Lausanne (CH); SOBRINO, Pablo, 1260 Nyon (CH)
(74) Representative: Gille Hrabal Partnerschaftsgesellschaft mbB Patentanwälte

(56) References cited:
- EP-A1- 0 452 736
- EP-A1- 3 192 854
- WO-A1-00/29639
- WO-A1-03/102003
- WO-A1-2014/127451
- WO-A2-99/66104
- WO-A2-2011/147959
- .: "Rhodafac ASI Product Range", , 1 October 2016 (2016-10-01), pages 1-1, XP55665277, Italy Retrieved from the Internet: URL:http://www.italmatch.com/wp-content/up loads/2017/02/Rhodafac-ASI-Product-Range.p df [retrieved on 2020-02-05]
- Franco Ferrero ET AL: "Sol-Gel Process for Surface Modification of Leather" In: "Recent Applications in Sol-Gel Synthesis", 5 July 2017 (2017-07-05), InTech, XP55665028, ISBN: 978-953-51-3246-2 pages 283-299, DOI: 10.5772/67837, * page 286, line 25 - page 287, line 16 *
- B MAHLTIG ET AL: "Modified silica sol coatings for surface enhancement of leather.", ACTA CHIMICA SLOVENICA, 1 June 2012 (2012-06-01), pages 331-337, XP55665039, SI ISSN: 1318-0207
- Liu Danqing ET AL: "Supporting Information to "Self-Assembled Monolayers of Phosphonic Acids with Enhanced Surface Energy for High-Performance Solution-Processed N-Channel Organic Thin-Film Transistors" (https://onlinelibrary.wiley.com/doi/epdf/ 10.1002/anie.201300353)", , 1 January 2013 (2013-01-01), pages 1-43, XP55916584, Germany Retrieved from the Internet: URL:https://onlinelibrary.wiley.com/action /downloadSupplement?doi=10.1002/anie.20130 0353&file=anie_201300353_sm_miscellaneous_ information.pdf [retrieved on 2022-04-29] -& LIU DANQING ET AL: "Self-Assembled Monolayers of Phosphonic Acids with Enhanced Surface Energy for High-Performance Solution-Processed N-Channel Organic Thin-Film Transistors", ANGEWANDTE CHEMIE INTERNATIONAL EDITION, vol. 52, no. 24, 10 June 2013 (2013-06-10) , pages 6222-6227, XP55916589, ISSN: 1433-7851, DOI: 10.1002/anie.201300353

## Description

There is a need for improving the lifespan of watchstraps without impacting on the natural look and feel of the leather. A composition allowing an improvement in water repellence and microbial resistance according to the use claimed in this invention has been elaborated. Finished leather watchstraps can be treated with the composition accoridng to the claimed use to improve the satisfaction of customers.

Advantageously, leather watchstraps can be treated fully assembled, allowing to treat the straps from different suppliers. This will make it possible to differentiate genuine straps provided by the applicant from other straps available on the market.

### FIELD OF THE INVENTION

The present invention, inter alia, relates to a use of a composition and the treatment of leather, vegetal leather or textile used as watchstraps.

The composition used according to the invention contains an active organic compound (sometimes designated as "active molecule" in the present description) comprising a phosphonic acid group and one or more hydrophobic or hyper-hydrophobic functional groups (in particular alkyl groups, preferably fluorinated alkyl groups) as defined in claim 1.

### GENERAL DESCRIPTION

### TECHNICAL PROBLEM TO BE SOLVED

Leather watchstrap and leather jewellery are natural products that evolve over time. Subject to current wear conditions, in particular water and contact with the wearer's skin, they degrade rapidly both in terms of aesthetics and olfactory sensations. The rapid degradation of the leather watchstrap or leather jewellery is due, among other factors, to the exposure of the watchstrap to moisture, water and various organic materials derived from the activities carried out while wearing it (sweat, soap, dirt, etc.). Additionally, leather watchstraps can be a complex assembly of different kinds of leather and/or other materials. It can comprise a liner, a top layer, a stuffing, etc. The stuffing can be in leather or in another material. However, users want to keep the natural look and feel of leather as long as possible.

### BRIEF DESCRIPTION OF THE SOLUTION

The solution to this problem proposed by the invention consists in applying a composition to a watchstrap or to elements intended for producing a watchstrap, such as the external surface of a watchstrap, the lining, the stitching, and/or the internal elements, such as padding or rip-stop elements. The treatment provides hydrophobic and/or biocidal and/or anti-fouling properties allowing to improve the durability of the watchstrap without negatively influencing the look and feel of the watchstrap.

### STATE OF THE ART

Porous substrates, such as wristwatch straps, bracelets or necklaces, are commonly used for articles in contact with the skin of a user. These substrates allow water vapour to pass through and will keep the wear of the article comfortable. However, they have various water repellent behaviour. It is well known that development of bad smell on those products is due to bacterial growth on or in the substrate. However, wristwatch straps, bracelets or necklaces are not easy to clean.

The complex structure of porous substrates such as leather leads to challenges in understanding the exact decay pattern of a particular substrate. The decay depends on several factors including environmental conditions. For leather, its processing is also to be taken into account. Chemical damage can occur from exposure to environmental factors, including ultraviolet light, ozone, acid from sulphurous and nitrous pollutants in the air, sweat, etc. For leather, it is also known that exposure to long periods of low relative humidity (below 40%) can cause desiccation or irreversible changes to its fibrous structure. (Préserver les objets de son patrimoine: précis de conservation préventive; International Institute for Conservation of Historic and Artistic Works. Section française; Editions Mardaga, 2001; ISBN 2870097662, 9782870097663).

Finishing treatment of substrates such as leather consists in a group of surface operations aimed to enhance the natural qualities of the substrate and/or to cover imperfections possibly present on the surface. Mechanical protection, evenness of colour and touch properties are the main requirements for finishing. A number of acrylic, polyurethane and other film-forming synthetic polymers are common ingredients of finishing recipes; they are mixed with natural substances, both native and/or modified, like oils, waxes, caseins, albumins, cellulose esters and other substances. Numerous patents and articles describe these different methods in order to improve the antibacterial resistance, the water and/or oil repellence and/or the antifouling behaviour.

In general, a water- or stain-resistant substrate, such as leather or fabrics, is prepared by using chemicals that enable the formation of functional coatings with low surface free energy on the substrate surface. These coatings can be polymeric thin films containing silicones, fluorinated, or long-chain hydrocarbons. However, the permeability of air and water vapour of treated substrate could be compromised, and the development of new methods for the production of such substrates maintaining their natural characteristics is still a challenge.

Examples of fluoroalkyl silane or alkyl silane-based easy-to-clean coatings, i.e., coatings having repellent oil, water, and anti-fouling properties are described in numerous documents (e.g., DE 834 002, US 3,012,006, GB 935,380, US 3,354,022, DE 1 518 551, DE 38 36 815, DE 42 18 657, DE 195 44 763, WO 95/23830, EP 0 799 873, EP 0 846 716, JP 2001/115151, EP 1 033 395, EP 1 101 787). These coatings will offer protection to the leather, but can be seen and/or felt, and will lead to a perception that the leather has been treated and an artificial aspect.

The oil and water repellence can be imparted to the surfaces by hydrolysable fluorocarbon silanes. A chemical bonding occurs between the silane and the active hydrogen functional groups on the substrate. This is achieved by initial hydrolysis of the hydrolysable groups on the silane to silanol groups, which then undergo condensation with the functionality on the substrate. The more hydrolysable groups there are in the fluorocarbon silane to bond with the substrate, the more durable the coating will be (see WO 95/23830).

Leather watchstraps comprising an antibacterial agent are known and are described, for example, in the document DE 203 15 119 U1. According to this document, the watchstrap made of leather comprises an inner band (i.e., liner), in contact with the wearer's skin, made of a leather treated to have antibacterial properties. This strap has the advantage of not developing malodours, particularly in the case of perspiration. However, certain active ingredients incorporated into the strap, such as antibacterial agents, can become irritating or allergenic to the skin, especially in the case of prolonged contact of the strap on the skin, and more particularly in hot and humid conditions.

EP 0 452 736 A1 discloses a composition for impregnating leather, the composition comprising a fatliquoring agent and a fluorine-containing oil. Examples of such fatliquoring agents are fluoroalkyl phosphonic aicds, such as heptadecafluorodecyl phosphonic acid. The fluorine-containing oil is a perfluoropolyether.

### DESCRIPTION

In this application, the use of the word "a" or "an" means "at least one", and the use of "or" means "and/or" unless specifically stated otherwise.

One objective of the treatment of the invention, which is called "functionalization" in this description, is to reduce or limit the presence of microorganisms responsible for unpleasant odours in watchstraps without damaging its look and feel characteristics. The treated substrate will have improved moisture absorbing, cleaning, antifouling and/or odour adsorption properties. The functionalization process does not substantially degrade the substrate, and will keep its original touch and look.

More specifically, the present invention relates to a use of a functionalization composition, to a process of functionalizing a porous substrate such as natural leather, vegetal leather (such as Piñatex^{®}, MycoTEX^{®}, Tencel^{®}, eucalyptus, bamboo, hevea, etc.), cork or fabrics (such as cotton, linen, silk, nylon, polyamide, aramid fabrics and the like), and to a functionalized product made from said substrate as defined in the claims.

### DESCRIPTION OF THE FIGURES

Fig. 1 is a diagram showing the water absorption or samples in relation to plasma pressure shown in Table 2.
Fig. 2 shows water absorption of samples (%) vs. time lapse after surface preparation obtained in tests 0, 23, 33 and 35 shown in Table 9.
Fig. 3 shows water absorption (%) vs. treatment time obtained in tests 0 and 22 to 25 summarized in Table 10.
Fig. 4 shows water absorption (%) vs. concentration of treating solution of tests 0, 23 and 26 to 29 given in Table 11.

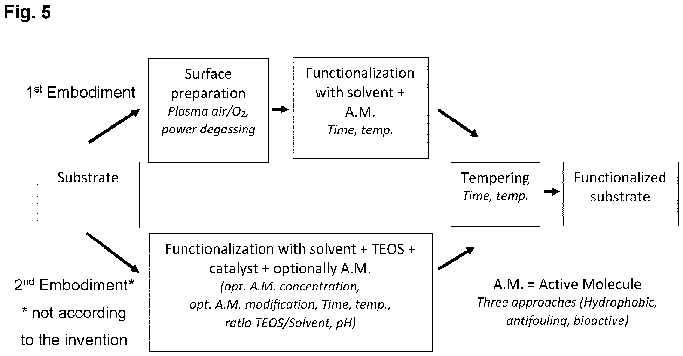

Fig. 5 shows schematically the embodiment of the invention explained below.

The invention provides the following aspects:
1. Use of a composition for impregnating a watchstrap or parts thereof, the composition comprising
   a) an organic solvent selected from ethanol and isopropanol,
   b)at least one active organic compound selected from the group consisting of n-octadecylphosphonic acid, 12,12,13,13,14,14,15,15,15-nonafluoropentadecylphosphonic acid, 3,3,4,4,5,5,6,6,7,7,8,8,9,9,10,10,10-heptadecafluorodecylphosphonic acid and 12,12,13,13,14,14,15,15,16,16,17,17,18,18,19,19,19-heptadecafluorononadecyl-phosphonic acid.
2. The use of the composition of aspect 1, the composition additionally comprising bioactive metal nanoparticles, preferably silver nanoparticles.
3. The use of the composition of any of the preceding aspects, wherein the organic solvent in the composition is ethanol.
4. A process for functionalizing a substrate which is a watchstrap or parts thereof by impregnation, comprising the steps
   i. selecting a substrate;
   ii. degassing the substrate;
   iii. treating the substrate with oxygen plasma or air plasma;
   iv. impregnating or coating at least partially the substrate with the composition defined in aspect 1;
   v. drying the treated substrate.
5. The process of aspect 4, wherein the substrate material is selected from natural leather, natural leather alternatives made from plant fibres, cork, and textile fabrics, and combinations thereof.
6. A watchstrap obtainable by the process of any of aspects 4 to 5.
7. A watchstrap comprising at least one active organic compound as defined in any of aspects 1 or 3.

### DETAILED DESCRIPTION OF THE INVENTION

### MEANS TO SOLVE THE PROBLEM

It is known that microorganisms need water in order to be active. By developing a hydrophobic or hyper-hydrophobic functionalization of the substrate, it is possible to limit the water presence inside and/or on the surface of said substrate. This will influence the activity of the microorganisms. Consequently, the substrate will not develop unpleasant odours or it will need much more time to develop such bad smells.

Another way to prevent unpleasant odours is to avoid the fouling of microorganisms. This allows to get rid of the microorganism by a simple mechanical action such as friction of the wrist on the substrate or wiping. Additionally, the compound can also show a bioactivity against the microorganisms causing the bad smells.

The limitation of microbial growth on or in leather watchband liners in order to limit the development of abnormal odours can occur in two different ways: with an antifouling treatment of the surface of the substrate which will limit the adhesion of the organisms responsible for bad odours, or with a biocide treatment. A combination of antifouling and biocide treatment is also possible. Avoiding the creation of a biofilm due to microorganisms, dead or not, will prevent the generation of bad odours. An antifouling treatment by limiting the presence of microorganisms will avoid or at least limit the bad odours apparition. The degradation of the leather can also be slowed down.

Three approaches have been used by the inventors in all embodiments of the invention:
A. a *hydrophobic or hyper-hydrophobic* treatment may be applied to control the water concentration of the substrate and avoid the introduction of water in the substrate. The accumulation and concentration of substances responsible for bad smells can be limited by inactivating the microorganisms by means of the unfavourable hydric conditions.
B. an "*antifouling*" polyalkylene glycol (e.g., polyethylene glycol) based treatment will prevent the microorganisms and cells deposited on the surface from adhering to it. As a result, a simple mechanical action, wrist friction or wiping, will enable their elimination. (not claimed)
C. a treatment to get *cationic bioactive surfaces* will have the same "*antifouling*" effect as the polyalkylene glycol treatment, (not claimed)

Approach A can be combined with the other approaches according to the invention within one and the same active molecule(s) (active organic compound(s)). In general, one active molecule or a mixture of two or more different active molecules can be applied in the invention.

### FUNCTIONAL GROUPS

The active organic compounds in the functionalizing composition used according to the invention have a phosphonic acid group and a hydrophobic or hyper-hydrophobic group. The hydrophobic and/or hyper-hydrophobic group-containing compounds used in the composition of the invention are alkyl phosphonates or fluorinated alkyl phosphonates as defined in claim 1.

The term "phosphonate" is used herein for designating the phosphonic acid and salts thereof. Counter ions of the salt can be any suitable cations such as metal cations (e.g., sodium, potassium, calcium, magnesium and any other metal cation that does not impair the properties of the compound) or organic cations such as ammonium. The phosphonic acid group is preferred.

The hydrophobic or hyper-hydrophobic group-containing active organic compounds for use in the invention are n-octadecyl phosphonic acid, 12,12,13,13,14,14,15,15,15-nonafluoropentadecylphosphonic acid, 3,3,4,4,5,5,6,6,7,7,8,8,9,9,10,10,10-heptadecafluorodecylphosphonic acid and 12,12,13,13,14,14,15,15,16,16,17,17,18,18,19,19,19-heptadecafluorononadecyl-phosphonic acid.

Compounds providing an "*antifouling*" effect to the surface of the substrate (not claimed) are for example polyalkylene glycol such as polyethylene glycol, propylene glycol- or butylene glycol-containing compounds.

Besides, polyalkylene glycol-containing compounds (not claimed) usually have alkoxy terminal groups, obtained by alkylating the hydroxyl terminals, such as methyl, ethyl, propyl or butyl terminal groups. If the terminals are not alkylated, the terminal group is a hydroxy group.

Compounds having bioactive functional groups which give a cationic character to the surface of the substrate (not claimed) are for example ammonium-containing compounds, triazolium-containing compounds and/or imidazolium- containing compounds. In case of an ammonium group, the compound may have an ammonium group -NH₃⁺ or an alkyl-substituted ammonium group forming the ammonium by the covalent bond to the rest of the molecule. It has preferably a C₁₀-C₁₈ alkyl chain and hydrogen or short-chain alkyl groups such as C₁₋₆ alkyl groups, ethyl being preferred, on the nitrogen. The bioactive functional group is linked to the phosphonate group via the hydrophobic or hyper-hydrophobic group, i.e., it is located on the "other end" of the hydrophobic or hyper-hydrophobic group relative to the phosphonate group.

The counter ion may be any anion, such as halogenide, sulfate, nitrate, phosphate, trifluoromethylsulfonyl or other anion of an inorganic or organic acid. Halogenides and trifluoromethylsulfonyl are preferred, and chloride, bromide and trifluoromethylsulfonyl are particularly preferred.

A compound wherein the hyper-hydrophobic, antifouling and bioactive groups are combined (not claimed) is CH₃(CH₂)ₙ(N(CH₃)₂)⁽⁺⁾ (CH₂)ₘPO₃H Cl⁽⁻⁾ (wherein n and m = 2-18, m and n being identic or different).

Preferred examples for this type of molecule (not claimed) are 12-Aminododecylphosphonic acid hydrochloride salt, (12-Dodecylphosphonic acid)triethylammonium chloride and (12-Dodecylphosphonic acid)-N,N-dimethyl-N-octadecyl ammonium chloride.

Examples for compounds which comprise both a phosphonate group, a hydrophobic group and an imidazolium group (not claimed) are 1-Methyl-3-(dodecylphosphonic acid)imidazolium bromide and 1-Methyl-3-(dodecylphosphonic acid)imidazolium bis(trifluoromethylsulphonyl)imide. An example for a compound having a hydrophobic group and a triazolium group is 1-Methyl-1,2,4-(dodecyl-phosphonic acid)triazolium bromide.

Additionally, bioactive nanoparticles such as silver nanoparticles can be comprised in the functionalizing composition for the use according to the invention.

The active organic compound can be a mixture of different molecules with specific effect.

In particular, phosphonic acid and hydrophobic or hyper-hydrophobic group containing compounds are compatible and soluble in ethanol and have a very low reactivity with natural leather and are therefore used according to the invention in the composition for impregnating a watchstrap.

The compounds used in the invention are commercially available, or can be synthesized according to methods known in the art from precursor compounds commercially available.

### ACTIVE MOLECULES (AM) TESTED

Alkyl chains, fluoroalkyl chains and/or linear polyether chains (not claimed) such as polyalkyleneglycol (e.g., PAG, PEG) with a phosphonate (-PO₃H₂) group, or a phosphonate cationic molecule such as C₁₆H₃₀N₂PO₃H₂⁽⁺⁾ Br⁽⁻⁾ (1-Methyl-3- (dodecylphosphonic acid)imidazolium) bromide; C₁₆H₃₀N₂PO₃H₂⁽⁺⁾ C₂F₆NO₄S₂⁽⁻⁾; H₃N⁽⁺⁾C₁₂H₂₄PO₃H₂ Cl⁽⁻⁾ (1-Methyl-3-(dodecylphosphonic acid)imidazolium bis(trifluoromethylsulphonyl)imide) (not claimed).

Examples of tested molecules can be seen in the following table.

Examples described in the present specification have been carried out with the AM_7 solution (12,12,13,13,14,14,15,15,15-nonafluoropentadecylphosphonic acid) concentration of 1.21·10⁻² mol·L⁻¹ in ethanol, called "solution 1".

Watchstrap elements treated with sol-gel (not according to the invention) have been tested externally for allergenic substances: no such substances have been found and some of the treated bracelets have been worn during 6 months without any irritation.

**Table 1 (*: not according to the invention)**

| # | | Formula | Antifouling effect |
|---|---|---|---|
| AM_3* | Octylphosphonic acid | CH₃(CH₂)₇PO(OH)₂ | Hydrophobic |
| AM_4* | Dodecylphosphonic acid | CH₃(CH₂)₁₁PO(OH)₂ | Hydrophobic |
| AM_5 | n-Octadecylphosphonic acid | CH₃(CH₂)₁₇PO(OH)₂ | Hydrophobic |
| AM_6* | 3,3,4,4,5,5,6,6,6-nonafluorohexylphosphonic acid | CF₃(CF₂)₃(CH₂)₂PO(OH)₂ | Hyper-hydrophobic |
| AM_7 | 12,12,13,13,14,14,15,15,15-nonafluoropentadecylphosphonic acid | CF₃(CF₂)₃(CH₂)₁₁PO(OH)₂ | Hyper-hydrophobic |
| AM_8 | 3,3,4,4,5,5,6,6,7,7,8,8,9,9,10,10,10-heptadecafluorodecylphosphonic acid | CF₃(CF₂)₇(CH₂)₂PO(OH)₂ | Hyper-hydrophobic |
| AM_9 | 12,12,13,13,14,14,15,15,16,16,17,17 ,18,18,19,19,19-heptadecafluorononadecyl-phosphonic acid | CF₃(CF₂)₇(CH₂)₁₁PO(OH)₂ | Hyper-hydrophobic |
| AM_12* | 6-[2-[2-(2-methoxyethoxy)ethoxy]ethoxy] hexylphosphonic acid | CH₃O(PEG)₃(CH₂)₆PO(OH)₂ | Antifouling |
| AM_13* | 2-[2-(2-methoxyethoxy)ethoxy] ethylphosphonic acid | CH₃O(PEG)₂(CH₂)₂PO(OH)₂ | Antifouling |
| AM_14* | 2-[2-(2-methoxyethoxy)ethoxy] hexylphosphonic acid | CH₃O(PEG)₂(CH₂)₆PO(OH)₂ | Antifouling |
| AM_15* | 2-[2-(2-hydroxyethoxy)ethoxy] ethylphosphonic acid | HO(PEG)₂(CH₂)₂PO(OH)₂ | Antifouling |
| AM_16* | 2-[2-(2-hydroxyethoxy) ethoxy]hexylphosphonic acid | HO(PEG)₂(CH₂)₆PO(OH)₂₂ | Antifouling |
| AM_17* | {2-[2-[2-[2-[2-[2-[2-[2-[2-[2-[2-[2-[2-(2-hydroxyethoxy)ethoxy]ethoxy]ethoxy] ethoxy]ethoxy]ethoxy]ethoxy]ethoxy] ethoxy]ethoxy]ethoxy]-ethyl]}phosphonic acid | CH₃O(PEG)₁₅(CH₂)₂PO(OH)₂ | Antifouling |
| AM_19* | 1-Methyl-3- (dodecylphosphonic acid) imidazolium bromide | [Imidazolium⁽⁺⁾ (CH₂)₁₂PO(OH)₂] Br⁽⁻⁾ | Cationic bioactive |
| AM_20* | 1-Methyl-3-(dodecylphosphonic acid) imidazoliumbis(trifluoromethylsulpho nyl)imide | [Imidazolium⁽⁺⁾ (CH₂)₁₂PO(OH)₂] [(F₃CSO₂)N]⁽⁻⁾ | Cationic bioactive |
| AM_21* | 12-Aminododecylphosphonic acid hydrochloride salt | [H₃N(⁺)(CH₂)₁₂PO(OH)₂)] Cl⁽⁻⁾ | Cationic bioactive |
| AM_22* | (12-Dodecylphosphonic acid)-N,N-dimethyl-N-octadecyl ammonium chloride | [(CH₃(CH₂)₁₇N(⁺) (CH₃)₂(CH₂)₃PO(OH)₂] Cl⁽⁻⁾ | Cationic bioactive |
| AM_23* | (3-Propylphosphonic acid)-N,N-dimethyl-N-octadecyl ammonium chloride | [(CH₃(CH₂)₁₇N⁽⁺⁾ (CH₃)₂(CH₂)₁₂PO(OH)₂] Cl⁽⁻⁾ | Cationic biocative |

### PROCESSES

Different processes can be used to functionalize the substrate according to the use of the invention, such as impregnation with an organic solvent selected from ethanol and isopropanol, or any other adapted way.

The organic solvent is to be chosen from ethanol and isopropanol according to the nature of the substrate to be treated, the process temperature and the solubility of the compound.

A combination of processes is also possible.

Additionally, a pre-treatment of the substrate is done comprising O₂ or air plasma treatment, degassing and optionallyr cleaning.

For impregnation, it has been tested that a structure comprising natural leather is not damaged by ethanol in the chosen temperature and duration range.

In order to evaluate the samples and the process steps, water adsorption of the treated sample has been measured.

### FIRST EMBODIMENT

The impregnation method, with an active molecule and an organic solvent selected from ethanol and isopropanol, comprises the steps of:
1) Selecting a substrate such as natural leather, vegetal leather or fabrics;
2) Degassing the substrate to remove among other water in excess or to control water amount in the object;
3) Treating the substrate with O₂ plasma or air plasma for surface activation;
4) Impregnating or coating at least partially the substrate with at least one chosen active organic compound(s) dissolved in a selected organic solvent;
5) Drying the treated substrate to remove the remaining liquid.

### SUBSTRATES

A watchstrap, according to the invention, can be a complex assembly of different kinds of leather and/or other materials, e.g., fabrics. In this case the watchstrap has a multi-layered structure. The watchstrap can comprise a liner, i.e., the layer which is in direct contact to the skin and is disposed on the inner side of the watchstrap.

Liners usually have two sides with different texture. The outer side is the side intended to be in contact with the skin and the inner side is the side intended to be in contact with the rip-stop layer or with the stuffing. The inner side is usually "rougher", i.e., more porous.

The outermost surface layer is normally a leather layer, which gives the watchstrap its outer appearance when the watch is worn. A tear-proof intermediate strengthening layer (rip-stop layer) and/or a stuffing, etc. may also be present. The stuffing can be in leather or in another material. Different parts of the watchstrap can be assembled by any known technique adapted to the combination of material, i.e., sewing, gluing, etc.

All different parts of the watchstrap can be functionalized separately according to the invention, i.e., liner, thread, stuffing, etc. and can be substrates.

Further, only some or all parts can be functionalized before the assembly of the watchstrap.

In an alternative, the assembled watchstrap or a pre-assembled watchstrap element can be functionalized according to the invention.

All of these alternatives are suitable substrates according to the invention.

Advantageously, the substrate is porous such as natural leather, vegetal leather, i.e., natural leather alternatives made from fibers such as cellulosic fibers extracted from plant leaves (such as Piñatex^{®}, MycoTEX^{®}, Tencel^{®}, Lyocell^{®}, pineapple, eucalyptus, bamboo, hevea, etc.), cork, textile fabrics such as cotton, linen, silk, nylon, polyamide, aramid fabrics and the like.

For manufacturing vegetal leather, plant materials such as long plant fibres, i.e., pineapple or eucalyptus fibres, mycelium of mushrooms or the like, are used to create a non-woven substrate, which has an outer appearance strongly similar to natural leather.

Preferably, most parts of the watchstrap and the separate parts thereof such as liner, stuffing and outer surface layer are made of porous material. Some parts such as tear protective layer (rip-stop layer), however, are usually non-porous.

Porous substrates are to be understood in a broad meaning, as for example a matrix containing interstitial spaces or voids in which air or a solvent may pass. Porosity may take several forms, from interconnected micro-porosity, folds, and inclusions to macro porosity visible on the external surface. Spaces between fabric thread or fibers can be assimilated to porosities.

Porous means in particular permeable for water vapour.

According to the invention, natural leather is used preferably as a substrate.

### SURFACE PREPARATION

Before the functionalizing treatment is applied, the surface of the substrate is prepared (pre-treated) according to the process of the invention. The main stages of this preparation treatment are degassing and treatment with air or O₂ plasma.

The degassing of a substrate such as leather is important for obtaining a good quality of functionalization in the invention. It mainly ensures the removal of water in the liners. Usually, degassing is achieved by heating to a moderate temperature under vacuum. One example of degassing consists in treating the substrate for 16 hours at 40 °C under a pressure of 0.1 hPa.

The substrate may also be first degassed and then «rewetted» up to a specific preselected humidity before applying the functionalizing treatment of the invention, to stabilize the substrate and avoid further drying. The rewetting can be achieved, for example, by storing the substrate in an environmental chamber at the specific preselected humidity and a suitable temperature until the system is in equilibrium.

Treating a substrate such as natural leather by irradiating oxygen or air plasma onto the surface of the substrate for a predetermined duration and with a selected power has shown to improve the functionalization. Air plasma shows slightly better results than O₂ plasma and is therefore preferred. Plasma is generated by usual means known to the skilled person. By the plasma treatment, the surface of the substrate is activated.

A high power plasma does not improve the surface activation. Results show that a power between 25 and 60 W gives satisfactory results; advantageously a power of 30 W is used according to the invention. The plasma may be applied, for example, using air or O₂, at 25 to 60 W for 30 s to 6 minutes at 0.3 to 3 hPa.

Longer treatment time does not improve the surface activation. A treatment time between 30 seconds and 6 minutes gives satisfactory results; advantageously a duration between 30 seconds to 4 minutes, more advantageously a duration of 30 seconds is employed.

No significant influence of the pressure variation of the plasma has been observed after treatment with a solution of AM_7 in ethanol having a concentration of 1.21·10⁻² mol·L⁻¹. The results are shown in Table 2.

**Table 2 (* not according to the invention)**

| Test | Absorption (%) | Test | Absorption (%) |
|---|---|---|---|
| Untreated* | 54 | No plasma and treated* | 43 |
| Plasma and treated Plasma pressure (hPa) | | Plasma and treated Plasma pressure (hPa) | |
| 0.1 | 16 | 0.7 | 21 |
| 0.2 | 15 | 0.8 | 14 |
| 0.3 | 17 | 0.9 | 15 |
| 0.4 | 17.5 | 1 | 17.5 |
| 0.5 | 17 | 2 | 17 |
| 0.6 | 17.5 | 3 | 18 |

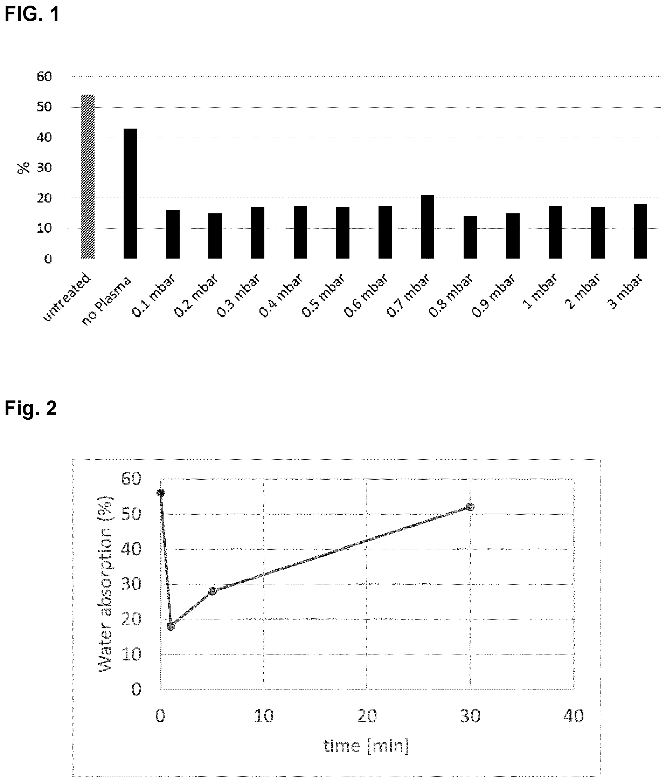

The results of this test are shown in Figure 1

Best functionalization is obtained with a preparation treatment consisting of degassing for 16 hours at 40 °C under a pressure of 0.1 hPa and subsequent treatment with air plasma for 30 s, 30 W and 0.5 hPa.

### Time after surface activation

Functionalization needs also to occur directly after pre-treatment with air plasma or oxygen plasma. It has been observed that the effect of the pre-treatment will disappear after only 30 minutes. Therefore, according to the method of the invention the functionalization treatment is carried out within 30 minutes after the plasma treatment has been finished.

### FUNCTIONALIZATION TREATMENT

For the functionalizing treatment according to the invention, several parameters have been found to be of importance.

### Solvents

The solvent is selected from ethanol and isopropanol for preparing the functionalization composition for the use of the invention.

Further, other organic solvents or combination of organic solvents are possible (not claimed) such as linear or cyclic alcohols, linear and cyclic ethers such as diethylether, diethyl tert.butylether, tetrahydrofurane, dioxane, esters such as ethylacetate, ketones such as acetone, diethylketone, ethylmethylketone, dipolar aprotic solvents, as long as they preserve the substrate and are compatible with the active molecule. The solvent should not have a strong odour and should not have high toxicity when in contact with the skin or when inhaled. Further it should be compatible with the substrate. The solvent is a polar solvent.

Surprisingly, ethanol shows the best results.

The most preferred organic solvent used in the first embodiment of the invention is ethanol.

### Treatment

Usually, the functionalization treatment is carried out by immersion of the pre-treated substrate into the solution of the active molecule. However, other methods are also applicable such as coating or spraying. However, care must be taken that the solution is contacted closely with the substrate so that the active molecule can penetrate adequately into the substrate.

The depth of penetration can be controlled through the viscosity of the composition or any other suitable way. The depth of penetration can be up to 100 %.

### Treatment time

After a certain immersion time, there is no further improvement of the water repellence of the treated surface. For example, after 6 hours of impregnation, increasing the immersion time does not affect significantly the behaviour of the substrate. Therefore, preferably, immersion time is between 6 hours and 10 hours.

The immersion treatment can be carried out at room temperature, i.e., 22 to 25 °C, and atmospheric pressure. Other conditions can also be adopted as long as the leather is not deteriorated.

### Concentration of active molecule

The concentration of the active molecule should be as high as possible without formation of any precipitate; therefore, it should be set as close as possible to the solubility limit of the active molecule in the respective solvent.

Optimal functionalization can be obtained by preparation of the surface with air plasma (for example 30 s, 30 W, 0.5 hPa), followed by an immersion of the substrate in the active molecule containing composition within 1 minute or less after the surface plasma treatment, and keeping the substrate immersed in the solution for 6 h for impregnation.

### Drying

The substrate is dried after impregnation. Recommended drying temperature is from 20 °C to 85 °C, preferably from 25 °C to 65 °C in order to preserve the leather structure, more preferably 30 °C. Drying will be done until the solvent is sufficiently evaporated. At 85 °C, a duration of 15 hours allows the solvent to be sufficiently evaporated. At 30 °C, a duration of 72 hours allows the solvent to be sufficiently evaporated.

Advantageously the air is ventilated during drying.

For example, the substrate can be placed in a Greiner Tube for drying.

Advantageously the functionalized substrate is dried under ventilated air at 30 °C for 72 h.

### OPTIMAL PARAMETERS FOR IMPREGNATION METHOD

Most preferably, the first embodiment comprises
- Active molecule
   ∘ 12,12,13,13,14,14,15,15,15-nonafluoropentadecylphosphonic acid (AM_7)
- Solution
   ∘ (12,12,13,13,14,14,15,15,15-nonafluoropentadecylphosphonic acid) (AM_7) concentration of 1.21·10⁻² mol·L⁻¹ in ethanol
- Optimized process
   ∘ degassing the substrate for 16 hours at 40 °C under a pressure of 0.1 hPa;
   ∘ treating with air plasma 30 W, 30 s, 0.5 hPa;
   ∘ proceeding with the impregnation within 1 minute after air-plasma treatment;
   ∘ impregnating the substrate for 6 h at room temperature, i.e., 22 to 25 °C, and atmospheric pressure;
   ∘ drying the substrate (30 °C during 72h under ventilated air).

### EXAMPLES

All Examples described in the present description have been made with natural leather liners made of alzavel (calf leather).

The water absorption measurement in the Examples has been carried out using a desiccant scale working on the principle of thermo-gravimetry. The laboratory apparatus was an OHAUS^{™} MB35. The samples to be measured are usually dried before the measurement (the last manipulation being a passage in the oven or a previous measurement of water intake). The protocol for a sample is as follows:
- place a weighing dish in the thermo-gravimetric scale;
- fully immerse the sample in a container containing ultra-pure water for one minute.
- wipe the sample with paper towels;
- repeat the immersion and wiping operations 5 times;
- place the sample on the weighing dish in the scale;
- start the drying program. This program heats the sample to 60 °C and tracks the sample weight as the water evaporates under the effect of heat.

### COMPARISON BETWEEN ACTIVE MOLECULES

A comparison of the different active molecules on a substrate treated with air plasma (30 or 60 W, 30 s, 0.5 hPa) followed by an immersion in ethanol solution (concentration of the active molecule 10⁻² M) for 6 hours at ambient temperature has been made.

The results of the samples of tests 40, 41, 43, 44 and 45 show that the hydrophobic character is present for these active molecules. These hydrophobic functionalized substrates show no diffusion of a drop of water through the surface of the substrate.

For the measurement, a drop of water is deposited on the leather; the duration for the absorption of the water (visually observed) is chronometered.

Additionally, for substrates made of the leather layer liner, either alone or in combination with an untearable layer and/or a filler and/or a top layer, the water does not penetrate into most of the liners after 48 hours of immersion in the functionalization solution.

Surprisingly, it is observed that the surfaces functionalized with polyethylene glycol containing active molecules (tests 46 to 49, not according to the invention) are relatively hydrophobic in terms of drop angle and there is no diffusion of a single drop of water through the treated surface. However, the water intake of the complete sample dipped in water is almost instantaneous and coherent with the active molecule used. No difference is observed between the PEG containing active molecules (not accordig to the invention) having a terminal OH function and those having a methoxy function.

56 % is the maximum water increase when the calf leather (Alzavel) is saturated with water. Different types of leather and different batches of the same leather type may have different water saturation levels, which is known to the skilled person.

The drop angle is measured by goniometry. The results are shown in Table 3.

**Table 3 (* not according to the invention)**

| Test | Active molecule tested | Water absorption (%) | Drop angle (°) | Time for water absorption up to saturation (h) |
|---|---|---|---|---|
| 0* | Untreated leather substrate | 56 | 116 | <0.25 |
| 38* | AM_3 | 53 | 70.3 | 2-16 |
| 39* | AM_4 | | 97.2 | 1 |
| 40 | AM_5 | 15 | | |
| 41 | AM_5 | 22 | 106.2 | >48 |
| 42* | AM_6 | | 123.3 | 2-16 |
| 43 | AM_7 | 18 | 138.6 | >48 |
| 44 | AM_8 | | 131 | >48 |
| 45 | AM_9 | 8 | 123 | >48 |
| 46* | AM_13 | 55 | 105.1 | <0.1 |
| 47* | AM_14 | | 109.6 | <0.1 |
| 48* | AM_15 | 50 | 108.5 | <0.1 |
| 49* | AM_16 | | 103.7 | 1 |

### SURFACE PREPARATION

### Degassing

Degassing has been carried out by treating the substrate for 16 hours at 40 °C under a pressure of 0.1 hPa.

Comparison of water absorption without and with prior degassing shows that for any pretreatment (air or O₂), an improvement is shown in the following Table 4 with degassing. Samples 1 to 6 were functionalized with a solution of AM_7 in ethanol having a concentration of 1.21·10⁻² mol·L⁻¹.

**Table 4 (* not according to the invention)**

| Test | Degassing | No plasma, plasma air or O₂ | Plasma power (W) | Pretreatment time with plasma (min) | Water absorption (%) |
|---|---|---|---|---|---|
| 0* | Untreated leather substrate | | | | 56 |
| 1* | No | Air | 60 | 4 | 53 |
| 2* | No | Air | 30 | 4 | 52 |
| 3* | No | O₂ | 60 | 4 | 51 |
| 4 | Yes | Air | 60 | 4 | 34 |
| 5 | Yes | Air | 30 | 4 | 18 |
| 6 | Yes | O₂ | 60 | 4 | 33 |

**Surface activation** (see tests results 4 to 21 in Table 5)
Samples 4 to 21 were functionalized with a solution of AM_7 in ethanol having a concentration of 1.21·10⁻² mol·L⁻¹.

The results of Table 5 below show that:
- Plasma vs. no plasma
   Treating a substrate such as natural leather by irradiating oxygen or air plasma onto the surface of the substrate for a predetermined duration and with a selected power has shown to improve the functionalization.
- O₂ vs. air plasma
   Air plasma shows slightly better results that O₂ plasma.
- Plasma power
   The power of the plasma has been tested between 30 W and 300 W. A high power plasma does not improve the surface activation. Results show that a power between 25 and 60 W gives satisfactory results; advantageously a power of 30 W is used.
- Plasma treatment duration
   Treatment time has been tested between 30 seconds and 8 minutes. Longer treatment time does not improve the surface activation. Results (see tests 17 to 21 in Table 5) show that a treatment time between 30 seconds and 6 minutes gives satisfactory results; advantageously a duration between 30 seconds to 4 minutes, more advantageously a duration of 30 seconds.
- Plasma pressure
   The pressure has been varied between 0.1 hPa to 3 hPa. As illustrated in Figure 1, it is to be noted that no significant influence of the pressure variation of the plasma has been observed.

As shown in the following Table 5, best functionalization with AM_7 in ethanol at a concentration of 1.21·10⁻² mol·L⁻¹ was obtained with degassing and air plasma for 30 s, 30 W and 0.5 hPa.

**Table 5 (* not according to the invention)**

| Test | Degassing | No plasma, plasma air or O₂ | Plasma power (W) | | Pretreatment time with plasma (min) | Water absorption (%) |
|---|---|---|---|---|---|---|
| 0* | Untreated leather substrate | | | 56 | | |
| 4 | yes | Air | 60 | | 4 | 34 |
| 5 | yes | Air | 30 | | 4 | 18 |
| 6 | yes | O₂ | 60 | | 4 | 33 |
| 7 | yes | O₂ | 30 | | 4 | 37 |
| 8* | yes | No | | | | 43 |
| 9 | yes | Air | 120 | | 4 | 45 |
| 10 | yes | Air | 180 | | 4 | 46 |
| 11 | yes | Air | 240 | | 4 | 43 |
| 12 | yes | Air | 300 | | 4 | 40 |
| 13 | yes | O₂ | 120 | | 4 | 34 |
| 14 | yes | O₂ | 180 | | 4 | 42 |
| 15 | yes | O₂ | 240 | | 4 | 40 |
| 16 | yes | O₂ | 300 | | 4 | 44 |
| 17 | yes | Air | 30 | | 0.5 | 16 |
| 18 | yes | Air | 30 | | 1 | 19 |
| 19 | yes | Air | 30 | | 2 | 18 |
| 20 | yes | Air | 30 | | 4 | 20 |
| 21 | yes | Air | 30 | | 8 | 32 |

### Other example of solution

A solution of n-Octadecylphosphonic acid in ethanol at a predetermined concentration of 1.21·10⁻² mol·L⁻¹ to solubility limit was prepared. The solution was heated at about 60 °C and stirred to achieve the full dissolution of the solid. Processing a substrate with this second solution shows the same tendencies as with the solution 1.

### Functionalizing treatment

The chosen active molecule (AM) is mixed with the selected solvent. Mixing is done for 6 hours with a solution containing between 10⁻⁴ M and the solubility limit of the chosen active molecule in a selected solvent such as ethanol. Other solvents or a mixture of solvents (not claimed) is also possible as long as they are compatible with the substrate and the sol-gel process. If necessary, the mixture can be heated and/or stirred until complete dissolution of the active molecule.

### Solvents

Ethanol and isopropanol have been tested. Both are suitable.

### Time after surface activation (Tests 23, 33 to 35)

Functionalization needs also to occur directly after pre-treatment with the oxygen plasma or air plasma. It has been observed that the effect of the plasma pre-treatment will essentially disappear after only 30 minutes. The results are shown in Table 9.

**Table 9 (* not according to the invention)**

| Test | Treatment time for solution 1 (h) | Concentration (Mol L⁻¹) | No. of treated samples | Time after surface activation (min) | Water absorption (%) |
|---|---|---|---|---|---|
| 0* | Untreated leather substrate | | | | 56 |
| 23 | 6 | 10⁻² | 1 | 1 | 18 |
| 33 | 6 | 10⁻² | 1 | 5 | 28 |
| 35 | 6 | 10⁻² | 1 | 30 | 52 |

The results of this test are shown in Figure 2.

### Treatment time (Tests 22 to 25)

It has been shown that after a certain immersion time, there is no improvement of the water repellence of the treated surface. For AM_7 in ethanol at a concentration of 1.21·10⁻² mol·L⁻¹ (solution 1), after 6 hours of impregnation, the absorption is of 18 % and increasing the time does not affect significantly the behaviour of the substrate. The results are shown in Table 10.

**Table 10 (*not according to the invention)**

| Test | Treatment time for solution 1 (h) | Concentration (Mol L⁻¹) | No. of treated samples | Time after surface activation (min) | Water absorption (%) |
|---|---|---|---|---|---|
| 0* | Untreated leather substrate | | | | 56 |
| 22 | 3 | 10⁻² | 1 | 1 | 34 |
| 23 | 6 | 10⁻² | 1 | 1 | 18 |
| 24 | 14 | 10⁻² | 1 | 1 | 17 |
| 25 | 24 | 10⁻² | 1 | 1 | 18 |

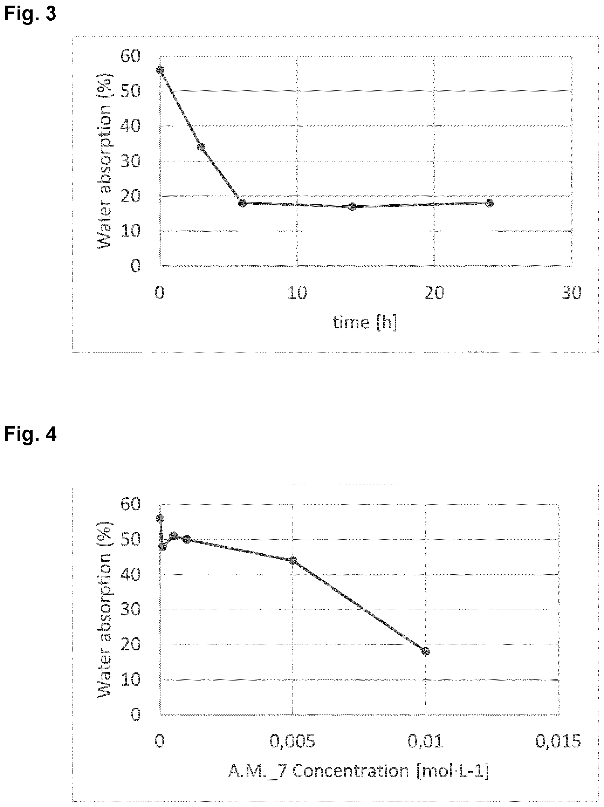

The result of this test is shown in Fig. 3.

### Concentration of the solution (Tests 23 and 26-29)

The concentration of the active molecule should be as high as possible without formation of any precipitate; therefore, it should be set as close as possible to the solubility limit of the active molecule in the respective solvent as shown in Table 11.

Optimal functionalization with AM_7 in ethanol at a concentration of 1.21·10⁻² mol·L⁻¹ (solution 1) were obtained with air plasma (30 s, 30 W, 0.5 hPa), followed by an immersion of the substrate for 1 minute or less after the surface plasma treatment, and keeping the substrate immersed in the solution for 6 h.

**Table 11 (* not according to the invention)**

| Test | Treatment time for solution 1 (h) | Concentration (Mol L⁻¹) | No. of treated samples | Time after surface activation (min) | Water absorption (%) |
|---|---|---|---|---|---|
| 0* | Untreated leather substrate | | | | 56 |
| 23 | 6 | 10⁻² | 1 | 1 | 18 |
| 26 | 6 | 5 x 10⁻³ | 1 | 1 | 44 |
| 27 | 6 | 10⁻³ | 1 | 1 | 50 |
| 28 | 6 | 5 x 10⁻⁴ | 1 | 1 | 51 |
| 29 | 6 | 10⁻⁴ | 1 | 1 | 48 |

The result of this test is shown in Fig. 4.

### DRYING

The substrate is dried after impregnation. Recommended drying temperature is from 20 °C to 85 °C, preferably from 25 °C to 65 °C in order to preserve the leather structure, more preferably 30 °C. Drying will be done until the solvent is evaporated. At 85 °C, a duration of 15 hours allows the solvent to be sufficiently evaporated. At 30 °C, a duration of 72 hours allows the solvent to be sufficiently evaporated. Advantageously the air is ventilated during drying.

For example, the substrate can be placed in a Greiner Tube for drying.

Advantageously the substrate is dried under ventilated air at 30 °C for 72 h.

## Claims

1. Use of a composition for impregnating a watchstrap or parts thereof, the composition comprising
a) an organic solvent selected from ethanol and isopropanol,
b) at least one active organic compound selected from the group consisting of n-octadecylphosphonic acid, 12,12,13,13,14,14,15,15,15-nonafluoropentadecylphosphonic acid, 3,3,4,4,5,5,6,6,7,7,8,8,9,9,10,10,10-heptadecafluorodecylphosphonic acid and 12,12,13,13,14,14,15,15,16,16,17,17,18,18,19,19,19-heptadecafluorononadecyl-phosphonic acid.

2. The use of the composition of claim 1, the composition additionally comprising bioactive metal nanoparticles, preferably silver nanoparticles.

3. The use of the composition of any of the preceding claims, wherein the organic solvent in the composition is ethanol.

4. A process for functionalizing a substrate which is a watchstrap or parts thereof by impregnation, comprising the steps
i. selecting a substrate;
ii. degassing the substrate;
iii. treating the substrate with oxygen plasma or air plasma;
iv. impregnating or coating at least partially the substrate with the composition defined in claim 1;
v. drying the treated substrate.

5. The process of claim 4, wherein the substrate material is selected from natural leather, natural leather alternatives made from plant fibres, cork, and textile fabrics, and combinations thereof.

6. A watchstrap obtainable by the process of any of claims 4 to 5.

7. A watchstrap comprising at least one active organic compound as defined in any of claims 1 to 3.

## Patentansprüche

1. Verwendung einer Zusammensetzung zum Imprägnieren eines Uhrenarmbandes oder von Teilen davon, wobei die Zusammensetzung umfasst
a) ein organisches Lösungsmittel, ausgewählt aus Ethanol und Isopropanol,
b) mindestens eine aktive organische Verbindung, ausgewählt aus der Gruppe bestehend aus
n-Octadecylphosphonsäure, 12,12,13,13,14,14,15,15,15-nonafluropentadecylphosphonsäure, 3,3,4,4,5,5,6,6,7,7,8,8,9,9,10,10,10-Heptadecafluordecylphosphonsäure und 12,12,13,13,14,14,15,15,16,16,17,17,18,18,19,19,19-heptadecafluorononadecylphosphonsäure.

2. Verwendung der Zusammensetzung nach Anspruch 1, wobei die Zusammensetzung zusätzlich bioaktive Metall-Nanopartikel, vorzugsweise Silber-Nanopartikel, enthält.

3. Verwendung der Zusammensetzung nach einem der vorhergehenden Ansprüche, wobei das organische Lösungsmittel in der Zusammensetzung Ethanol ist.

4. Verfahren zur Funktionalisierung eines Substrats, das ein Uhrenarmband oder Teile davon ist, durch Imprägnierung, umfassend die Schritte
i. Auswählen eines Substrats;
ii. Entgasen des Substrats;
iii. Behandeln des Substrats mit Sauerstoffplasma oder Luftplasma;
iv. Imprägnieren oder Beschichten des Substrats zumindest teilweise mit der in Anspruch 1 definierten Zusammensetzung;
v. Trocknen des behandelten Substrats.

5. Verfahren nach Anspruch 4, wobei das Substratmaterial aus natürlichem Leder, natürlichen Lederalternativen aus Pflanzenfasern, Kork und textilen Geweben sowie Kombinationen davon ausgewählt wird.

6. Uhrenarmband, erhältlich nach dem Verfahren gemäß einem der Ansprüche 4 bis 5.

7. Uhrenarmband, das mindestens eine aktive organische Verbindung nach einem der Ansprüche 1 bis 3 enthält.

## Revendications

1. Utilisation d'une composition pour imprégner un bracelet de montre ou des parties de celui-ci, la composition comprenant
a) un solvant organique choisi parmi l'éthanol et l'isopropanol,
b)au moins un composé organique actif choisi dans le groupe constitué par
l'acide n-octadécylphosphonique, l'acide 12,12,13,13,14,14,15,15,15-nonafluropentadécylphosphonique, l'acide 3,3,4,4,5,5,6,6,7,7,8,8,9,9,10,10,10-heptadécafluorodécylphosphonique et l'acide 12,12,13,13,14,14,15,15,16,16,17,17,18,18,19,19,19-heptadécafluorononadécyl-phosphonique.

2. Utilisation de la composition de la revendication 1, la composition comprenant en outre des nanoparticules métalliques bioactives, de préférence des nanoparticules d'argent.

3. Utilisation de la composition de l'une des revendications précédentes, dans laquelle le solvant organique de la composition est l'éthanol.

4. Procédé de fonctionnalisation d'un substrat qui est un bracelet de montre ou des parties de celui-ci par imprégnation, comprenant les étapes suivantes
i. sélectionner un substrat;
ii. dégazer le substrat;
iii. traiter le substrat avec un plasma d'oxygène ou un plasma d'air;
iv. imprégner ou recouvrir au moins partiellement le substrat avec la composition définie dans la revendication 1;
v. sécher le substrat traité.

5. Procédé de la revendication 4, dans lequel le matériau du substrat est choisi parmi le cuir naturel, les substituts du cuir naturel fabriqués à partir de fibres végétales, le liège, les tissus textiles et les combinaisons de ceux-ci.

6. Bracelet de montre pouvant être obtenu par le procédé de l'une des revendications 4 à 5.

7. Bracelet de montre comprenant au moins un composé organique actif tel que défini dans l'une des revendications 1 à 3.
